# EUROPÄISCHE PATENTSCHRIFT

(11) **EP 1 956 206 B1**
(45) Veröffentlichungstag und Bekanntmachung des Hinweises auf die Patenterteilung: **04.08.2010**
(21) Anmeldenummer: 08100270.1
(22) Anmeldetag: 09.01.2008
(51) Int. Cl.: F01N 3/20, F01N 3/08

(54) **Abgasreinigungssystem**
Exhaust gas cleaning system
Système de nettoyage des gaz d'échappement

(30) Priorität: 09.02.2007 EP 07102076
(43) Veröffentlichungstag der Anmeldung: 13.08.2008
(73) Patentinhaber: Sulzer Chemtech AG, 8404 Winterthur (CH)
(72) Erfinder: Hirschberg, Dr., Sebastian, 8408, Winterthur (CH)
(74) Vertreter: Sulzer Management AG

(56) Entgegenhaltungen:
- EP-A- 1 338 770
- EP-A- 1 481 719
- EP-A1- 1 054 139
- DE-A1- 4 313 393
- DE-C1- 19 734 627

## Beschreibung

Die Erfindung betrifft ein System zur Reinigung von Abgasen, die NOx enthalten, sowie ein Verfahren zur Reinigung von Abgasen, die NOx enthalten. Die Erfindung bezieht sich auch auf Komponenten in diesem System, insbesondere auf Mischer, Verdampfer und Dosierelemente.

Wegen neuer, verschärfter Abgasnormen werden in Zukunft auch Dieselfahrzeuge mit Katalysatoren ausgerüstet werden müssen. In Europa gelten ab 1.10.2009 die neue Euro 5 - Norm und ab 2012 die Euro 6 - Norm. Um die Euro 5 - Norm zu erfüllen, werden kleinere Transportfahrzeuge mit Abgasreinigungssystemen, die verbesserte Katalysatoren enthalten, ausgerüstet. Um die Euro 6 - Norm zu erfüllen, sind Personenkraftwagen, insbesondere PKW mit einem Dieselmotor mit Abgasreinigungssystemen, die verbesserte Katalysatoren enthalten, auszurüsten. Zur NOx - Minderung in sauerstoffreichem Abgas kann der bei Ottomotoren übliche 3-Wege-Katalysator nicht eingesetzt werden. Motoren mit sauerstoffreichem Abgas sind generell Dieselmotoren sowie Magermotoren. Eine mögliche Alternative für sauerstoffreiche Abgase ist der SCR - Katalysator (Selective Catalytic Reduction), bei dem NOx in einer Gasmischung aus NOx-haltigem Abgas und Ammoniak auch in Gegenwart von Sauerstoff zu einem grossen Teil zu N₂ reduziert wird. Ammoniak kann allerdings wegen seiner toxischen Eigenschaften nicht direkt im Auto mitgeführt und zudosiert werden. Deswegen favorisiert man in der Autoindustrie ein System, bei dem eine harmlose Harnstoff-Wasserlösung im Abgasstrom thermisch zu Ammoniak und CO₂ aufgespaltet wird. Die so erzeugte Ammoniakmenge sollte in einem stöchiometrischen Verhältnis zur im Abgas enthaltenen NOx-Menge stehen. Deswegen muss das Dosiersystem relativ genau regel- oder zumindest steuerbar sein und sollte auch kurze Ansprechzeiten aufweisen.

Die Zudosierung und Mischung der Harnstoff-Wasserlösung in das Abgas ist ein technisches Problem, für das bis heute noch keine zufriedenstellende Lösung gefunden wurde, insbesondere dann, wenn durch die Einbauverhältnisse nur ein beschränktes Platzangebot für das Abgasreinigungssystem verfügbar ist.

Da während der Fahrt der Motor sehr unterschiedlich belastet wird, variieren auch die Betriebspunkte des Abgassystems von Dieselfahrzeugen stark. Zwischen dem Abgasmassenstrom bei niedrigstem typischem Lastfall und höchster Last kann rund ein Faktor 10 liegen. Je nach Motor- und Fahrzeuggrösse kann bei sehr niedriger Last ein Abgasmassenstrom von maximal 100 kg/h in das Abgasreinigungssystem eingespeist werden. Bei grösster Last erreicht der Abgasmassenstrom mindestens 800 kg/h.

Die Temperaturen können zwischen 150°C im Kaltstartbetrieb und 700 - 750° während des Abbrandes eines Partikelfilters, welcher dem Abgasreinigungssystem vorgeschaltet ist, variieren. Die Zudosierung der Harnstoff-Wasserlösung, und damit die Umwandlung des NOx im Abgas in N₂, wird ab einer Abgastemperatur von 150°C, insbesondere ab einer Abgastemperatur von 200°C aktiviert. Der Massenstrom von Harnstoff-Wasserlösung, der dem Abgas zudosiert werden muss, damit die erforderliche stöchiometrische Mischung von NOx und Ammoniak erzeugt wird, beträgt zwischen 3 und 5 % des Benzinverbrauchs.

Der durch die Zudosierung und Vermischung der Harnstoff-Wasserlösung zusätzlich generierte Druckverlust ist kritisch, da durch Druckverlust im Abgassystem die Motorleistung reduziert wird, folglich wird der kleinst mögliche Druckverlust angestrebt.

Typische Abgasrohrdurchmesser liegen im Bereich 50 - 100 mm. Der Abstand des Katalysators von der ersten von möglicherweise mehreren Einmischstellen liegt typischerweise zwischen 4 und 10 Rohrdurchmessern.

Bei der Zersetzung der Harnstoff-Wasserlösung sind verschiedene Reaktionen möglich. Eine Möglichkeit ist der Zerfall in Isocyansäure und Ammoniak. Die Isocyansäure ist sehr instabil und kann verschiedene Reaktionen durchlaufen, wie beispielsweise zu Cyanursäure polymerisieren. Durch Pyrolyse kann der Harnstoff in Biuret (C₂H₅N₃O₂) und Ammoniak zerfallen. Ausserdem können bei der Erhitzung des Harnstoffes auch geringe Mengen von Triuret und Melamin entstehen. Die meisten dieser Reaktionsprodukte haben Schmelzpunkte bei sehr hohen Temperaturen, die zum Teil über 300°C liegen, und können deswegen im Betrieb zu Schichtbildung auf Einbauten im Abgasrohr führen und vor allem feine Spalte und Bohrungen verstopfen. Aus diesem Grund darf keine Harnstoff-Wasserlösung in den SCR-Katalysator gelangen, da durch Ablagerungen und Schichtbildung die Wirksamkeit des Katalysators reduziert oder einzelne Kanäle des Katalysators sogar gänzlich verstopft werden könnten. Damit beim Zerfall der Harnstoff-Wasserlösung möglichst wenige unerwünschte Nebenreaktionen ablaufen und dadurch unerwünschte Stoffe entstehen, wurden spezielle Hydrolysekatalysatoren entwickelt, die eine direkte Umsetzung von Harnstoff (CO(NH₂)₂) und Wasser (H₂O) in Ammoniak (NH₃) und Kohlendioxid (CO₂) bevorzugen. Ein derartiger Hydrolysekatalysator wird im Patent EP 0 487 886 B1 beschrieben. Laut Patentschrift kann mittels des Hydrolysekatalysators erreicht werden, dass bei Temperaturen ab 160 °C bei der Zersetzung der Harnstoff-Wasserlösung quasi ausschliesslich die gewünschte Hydrolysereaktion abläuft.

Bei den meisten bekannten technischen Umsetzungen der Harnstoff-Wasserlösung - Zudosierung wird eine Zerstäubungsdüse verwendet, welche die Harnstoff-Wasserlösung in feine Tröpfchen zerstäubt.

In den Patentschriften US 5'968'464 und US 6'361'754 B1 wird ein Verfahren beschrieben, in dem die Harnstoff-Wasserlösung in einer separaten Pyrolysekammer verdampft und in Ammoniak sowie CO₂ umgewandelt wird. Erst das schon umgewandelte Gas tritt dann in das eigentliche Auspuffsystem ein und wird dort mit dem Abgasstrom vermischt. Ähnliche Verfahren werden auch in den Patenten US 6'203'770 B1, WO 97/36676, US 6'834'498 B2 beschrieben.

In Patent US 7'090'810 B2 wird ein Verfahren zur verwandten Abgasreinigung bei Kraftwerken beschrieben, bei dem ein Teil des Abgasstroms abgezweigt wird. Dem abgezweigten Abgasstrom wird in einer separaten Kammer eine Harnstoff-Wasserlösung zugegeben, verdampft und durch Hydrolyse in Ammoniak und CO₂ umgewandelt. Dieser Teilstrom des Abgases wird dann durch ein Gebläse und einen statischen Mischer wieder mit dem Hauptstrom vermischt.

Gemäss des Verfahrens der WO 98/22209 wird dem Abgas flüssige Harnstoff-Wasserlösung tropfenförmig beigemischt. Die Tropfen, die nicht vollständig verdampft sind, werden vor dem Katalysator durch einen Tropfenabscheider wieder aus dem Abgas entfernt.

In Patent WO 98/28070 wird ein Verfahren beschrieben, bei dem die Harnstoff-Wasserlösung unter Druck gesetzt und erhitzt wird, bevor sie ins Abgas eingedüst wird. Durch die Entspannung der überhitzten Flüssigkeit wird die Verdampfung beschleunigt.

In der Patentanmeldung WO 2004/079171 A1 wird ein kombinierter Verdampfer und Verteiler, der aus innerlich porösen Rippen aufgebaut ist beschrieben. Harnstoff-Wasserlösung soll im Innern der porösen Struktur verteilt und verdampft werden. Die Verdampfungsenergie wird laut dieser Anmeldung über Wärmeleitung durch die Rippen aus der Strömung des heissen Abgases entzogen. Durch Öffnungen in den Rippen kann dann das gasförmige Ammoniak entweichen. Demzufolge dienen diese Rippen zugleich als Verdampfer und als Verteilgitter für das Ammoniak. Als problematisch könnte sich bei dieser Lösung der notwendige breite Temperaturbereich bei einer Anwendung in einem Abgasreinigungssystem in einem Fahrzeug erweisen.

Bei zumindest einigen der vorbekannten Lösungen treten folgende Probleme auf: Aus praktischen Gründen wird gewöhnlich eine Einspritzung mittels Einstoffdüse gewählt. Der Begriff Einstoffdüse wird speziell für Zerstäubungsdüsen verwendet, in welchen nur die zu zerstäubende Flüssigkeit durch die Düse gepumpt wird. Eine derartige Einstoffdüse ist beispielsweise in der WO2005/073524 gezeigt. Bei Zweistoffdüsen wird zusätzlich zur zu zerstäubenden Flüssigkeit auch ein Gas in die Düse gepumpt, wodurch die Zerstäubung verbessert werden kann. Allerdings ist eine Kompressionsvorrichtung für die Komprimierung des Gases erforderlich. Derartige Einstoffdüsen erzeugen typischerweise Tropfenspektren mit einem Sauterdurchmesser von 70 - 90 µm, aber einzelnen grossen Tropfen von bis zu 200 µm. Wegen der vorgängig beschriebenen Verschmutzungs- oder Verstopfungsproblematik muss dafür gesorgt werden, dass keine Tropfen in den Katalysator gelangen können. Die Flugzeit der Tropfen bis zum Katalysator beträgt nur wenige Millisekunden, was nicht ausreichend ist, um grössere Tropfen während der Flugphase zu verdampfen. Aus diesem Grund müssen zumindest die grösseren Tropfen aus dem Abgas abgeschieden werden und in einem Flüssigkeitsfilm verdampfen. Dazu wird ein kombiniertes Misch- und Verdampfungselement eingesetzt. Damit die Tropfen in der Strömung tatsächlich an diesem Element abgeschieden werden, muss die Strömung durch das Element abgelenkt werden. Ein derartiges Element kann beispielsweise als Blecheinsatz augsebildet sein, wie in der DE10239 417 A1 gezeigt ist. Das bedingt einen gewissen minimalen Druckabfall und damit eine Reduktion der Motorleistung. In der Praxis hat sich der Einsatz von Mischern mit einer Kreuzkanalstruktur gemäss DE 2 205 371 als kombinierte Mischer und Verdampfer bewährt. Der Druckabfall eines Mischers mit Kreuzkanalstruktur ist allerdings höher als der Druckabfall eines Mischelements, mittels welchem über Leitelemente eine Umlenkung der Strömung im Kanal erreicht wird.

Aufgabe der Erfindung ist die Vermeidung der Einleitung von Tropfen, die Harnstoff-Wasserlösung enthalten, in einen Katalysator, insbesondere einen SCR-Katalysator. Würden Tropfen der Harnstoff-Wasserlösung in den Katalysator gelangen, hätte dies die Verstopfung des Katalysators zur Folge und somit eine Verschlechterung der katalytischen Wirkung.

Diese Aufgabe wird durch ein Abgasreinigungssystem gelöst, welches einen geschlossenen Kanal umfasst, in welchem ein NOx enthaltender Abgasstrom von einer Abgasquelle zu einem Katalysator geleitet wird, wobei stromaufwärts des Katalysators ein Dosierelement zur Einleitung eines flüssigen Reaktionsmittels in den Abgasstrom vorgesehen ist. Stromabwärts des Dosierelements ist ein Verdampfer angeordnet. Der Verdampfer weist im Abgasstrom angeordnete Oberflächen auf, auf welche das flüssige Reaktionsmittel aufgebracht wird und an dessen Oberflächen das flüssige Reaktionsmittel verdampft wird, bevor das verdampfte Reaktionsmittel auf den Katalysator trifft. Die Aufbringung eines flüssigen Reaktionsmittels erfolgt nach einem besonders vorteilhaften Ausführungsbeispiel direkt auf die Oberfläche des Verdampfers. Das Dosierelement ist daher an der Anströmseite des Verdampfers positioniert. Der Verdampfer ist bevorzugt als Filmverdampfer ausgebildet. Im Anschluss an den Verdampfer kann ein Mischer vorgesehen sein, der ein statisches Mischelement umfasst. Der Mischer ist stromabwärts des Verdampfers angeordnet, um eine homogene Verteilung des flüssigen Reaktionsmittels im Abgasstrom herzustellen. Zwischen der Abgasquelle und dem Dosierelement ist ein Partikelfilter angeordnet, um Staub und Partikel abzuscheiden, welche die Funktion des Katalysators beeinträchtigen. Nach einem weiteren Ausführungsbeispiel ist der Filmverdampfer gleichzeitig als Mischer ausgebildet. Nach einem weiteren Ausführungsbeispiel weisen der Verdampfer und/oder der Mischer eine Kreuzkanalstruktur auf, die insbesondere gemäss DE 2 205 371 ausgestaltet ist. Die Oberflächen des Verdampfers bestehen aus thermisch gut leitfähigem Material, wodurch sich auf der Oberfläche der Leitelemente ausbildendeflüssigkeitsfilme nach einer kurzen Weglänge durch den Wärmeaustausch zwischen Leitelement und Flüssigkeitsfilm vollständig verdampfen. Als Materialien kommen neben Stählen, die bevorzugt Legierungselemente zur Erhöhung der Wärmeleitfähigkeit enthalten, andere gut leitfähige metallische Werkstoffe, insbesondere Kupferlegierungen, oder Keramiken hoher Wärmeleitfähigkeit zum Einsatz.

Nach einem weiteren Ausführungsbeispiel umfassen die Oberflächen des Verdampfers eine Mehrzahl von Leitelementen, die im wesentlichen entlang der Hauptströmungsrichtung des Abgasstroms angeordnet sind und zumindest teilweise berippt sein können. Die Leitelemente sind sternförmig um ein in einer zentralen Lage des Kanals angeordnetes Leitelement ausgerichtet. Das Leitelement ist insbesondere als ringförmiges Leitelement ausgebildet. Zumindest ein Teil der Oberflächen ist katalytisch wirksam, insbesondere hydrolysekatalytisch wirksam. Zumindest ein Dosierelement ragt in den Kanal. Zur gleichmässigen Verteilung des flüssigen Reaktionsmittels im Kanal kann auch eine Mehrzahl von Dosierelementen in den Kanal ragen. Das Dosierelement enthält eine Zuleitung zur Aufbringung des flüssigen Reaktionsmittels auf die Oberfläche des Verdampfers, wobei es sich insbesondere um ein Rohr mit Dosieröffnungen, durch die das flüssige Reaktionsmittel, das heisst insbesondere eine Harnstoff-Wasserlösung, auf die Oberflächen des Verdampfers geleitet wird. Das Verteilelement ist als eine Kapillare mit einer Austrittsöffnung oder eine Düse ausgebildet. Im Bereich der Austrittsöffnung kann eine Krümmung vorgesehen sein, damit das flüssige Reaktionsmittel sich optimal auf die Oberfläche des Verdampfers verteilen kann. Zur besseren Verteilung des flüssigen Reaktionsmittels speist die Zuleitung eine Mehrzahl von Verteilelementen, sodass die Anzahl der im Kanal angeordneten Einspeispunkte für das flüssigen Reaktionsmittel erhöht wird. Wegen der Verstopfungsgefahr durch ungewünschte Ablagerungen in Leitungen, in denen Harnstoff-Wasserlösung gefördert wird, muss dafür gesorgt werden, dass Leitungen oder enge Spalte, durch die Harnstoff-Wasserlösung fliesst, sich nicht auf Temperaturen über 100 °C erwärmen können. Das kann durch verschiedene Massnahmen erreicht werden, wobei das Dosierelement Mittel umfasst, um das vorzeitige Verdampfen des flüssigen Reaktionsmittels zu verhindern, Das Mittel ist insbesondere als eine thermische Isolierung gegenüber der Abgasströmung ausgebildet, beispielsweise als thermische Isolierung der Wand des Dosierstiftes. Das Mittel kann ein thermoelektrisches Peltierelement zur Kühlung des flüssigen Reaktionsmittels umfassen. Alternativ bewirkt das Mittel eine Temperierung des flüssigen Reaktionsmittels mittels eines Kühlkreislaufes oder durch eine kontinuierliche Rezirkulation eines Teils der Harnstoff-Wasserlösung in einem Kühlmantel. Das Dosierelement kann einen Kühlmittelkanal enthalten, mit einer Kühlmittelleitung zur Zufuhr von Kühlmittel sowie einer Kühlmittelleitung zur Abfuhr von Kühlmittel. Der Kanal kann als zylindrisches Rohr oder Stift ausgebildet sein, in welchem das Verteilelement angeordnet ist, wodurch das Verteilelement allseitig von einem Kühlfluid umströmbar ist. Der Kanal ist U-förmig ausgestaltet und/oder weist eine Trennwand auf. Der Kanal kann auch von zwei konzentrisch ineinander verlaufenden Rohren begrenzt werden, sodass ein Doppelrohr entsteht.

Das flüssige Reaktionsmittel umfasst insbesondere eine Harnstoff-Wasserlösung.

Besonders bevorzugt kommt ein Abgasreinigungssystem nach einem der vorhergehenden Ausführungsbeispiele in einem Fahrzeug, insbesondere in einem Personenkraftwagen oder einem Transportfahrzeug, welches mit einem Dieselmotor ausgerüstet ist, zur Verwendung. Durch das Vorsehen eines Dosierelements, welches das flüssige Reaktionsmittel als Film oder Rinnsal auf den Verdampfer aufbringt, wird vermieden, dass Tropfen des flüssigen Reaktionsmittels in den Katalysator mitgerissen werden und es in der Folge zu einer Verschmutzung oder einem Verstopfen des Katalysators kommt.

Das Verfahren zur Reinigung von Abgasen, welche NOx enthalten, umfasst die Schritte der Einleitung eines NOx enthaltenden Abgasstroms von einer Abgasquelle in einen Kanal , Aufbringen eines flüssigen Reaktionsmittels auf einen Verdampfer, Verdampfen des flüssigen Reaktionsmittels auf der Oberfläche des Verdampfers, Reaktion des verdampften Reaktionsmittels mit NOx in einem Katalysator. Vor dem Eintritt in den Katalysator erfolgt ein Vermischen des mit dem verdampften Reaktionsmittel beladenen Abgasstroms in einem Mischer.In dem Katalysator wird NOx mit dem in der Gasmischung enthaltenen Ammoniak trotz der Gegenwart von Sauerstoff zu N₂ reduziert.

Nachfolgend wird die Erfindung anhand der Zeichnungen erläutert. Es zeigen:
- Fig. 1: eine schematische Ansicht des Abgasreinigungssystems
- Fig. 2: eine erste Ansicht des Dosierelements, des Filmverdampfers, sowie des Mischers im Kanal
- Fig. 3: eine zweite Ansicht auf das Dosierelement und den Filmverdampfer gemäss Ausführungsbeispiel nach Fig. 2
- Fig. 4: eine Anordnung von Dosierelementen und Filmverdampfer nach einem zweiten Ausführungsbeispiel
- Fig. 5: eine Anordnung eines Filmverdampfers nach einem dritten Ausführungsbeispiel
- Fig. 6: eine Anordnung eines Filmverdampfers nach einem vierten Ausführungsbeispiel
- Fig. 7: ein Dosierelement nach einem ersten Ausführungsbeispiel
- Fig. 8: ein Dosierelement nach einem zweiten Ausführungsbeispiel
- Fig. 9: ein Dosierelement nach einem dritten Ausführungsbeispiel mit mehreren Varianten
- Fig. 10: ein Dosierelement nach einem vierten Ausführungsbeispiel mit mehreren Varianten
- Fig. 11: eine schematische Ansicht einer weiteren Variante des Abgasreinigungssystems

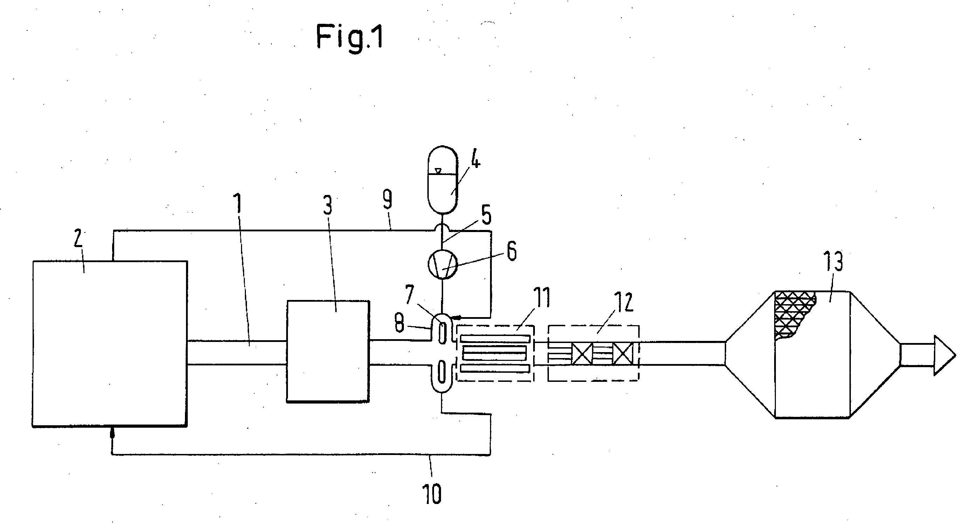

Mit dem erfindungsgemässen Abgasreinigungssysstem, wie es in Fig. 1 schematisch dargestellt ist, wird ein NOx-haltiger Abgasstrom 1 mittels eines flüssigen Reaktionsmittels, insbesondere einer Harnstoff-Wasserlösung unter Verwendung eines Katalysators, insbesondere eines SCR-Katalysators gereinigt. Der Abgasstrom 1 wird von einer Abgasquelle 2, wie einem Motor, insbesondere einem Dieselmotor, emittiert und enthält NOx. Der Abgasstrom wird stromabwärts der Abgasquelle 2 in einen Staub- und Partikelfilter 3 eingeleitet. Anschliessend wird der staub- und partikelfreie Abgasstrom 1 mit einem flüssigen Reaktionsmittel versetzt, welches eine Harnstoff-Wasserlösung umfasst. Die Harnstoff-Wasserlösung wird bis zum Gebrauch in einem Reservoir 4 aufbewahrt. Über eine Zuleitung 5 ist das Reservoir 4 mit einem Dosierelement 7 verbunden, mittels welchem das flüssige Reaktionsmittel auf den Verdampfer gebracht wird. In der Zuleitung kann zur Erhöhung des Einspeisdrucks und/oder zur verbesserten Förderung des flüssigen Reaktionsmittels ein Fördermittel, insbesondere eine Pumpe 6, vorgesehen sein. Das Dosierelement 7 ist von einem Kühlmantel 8 umgeben, in welchen eine Kühlmittelleitung 9 mündet und den eine weitere Kühlmittelleitung 10 verlässt. In dieser Fig. ist dargestellt, dass das Kühlmittel vom Kühlmittelkreislauf des Motors abgezweigt wird. Im Anschluss an das Dosierelement 7 ist im Abgasstrom ein Verdampfer 11 vorgesehen. Beim Verdampfer 11 handelt es sich um einen Filmverdampfer, der die benötigte Energie direkt aus dem Abgas bezieht. Ein derartiger Verdampfer darf nur eingesetzt werden, falls stromaufwärts des Partikelfilters 3 Staub und Partikel nahezu vollständig aus dem Abgasstrom 1 eliminiert werden. Im Anschluss an den Verdampfer ist ein Mischer 12 vorgesehen, bei welchem es sich insbesondere um einen statischen Mischer handelt. Nach Durchlaufen des Mischers 12 wird der Abgasstrom und das darin verteilte verdampfte Reaktionsmittel in den Katalysator 13 eingeleitet. Dort erfolgt die vollständige Umsetzung des NOx mit der Harnstoff-Wasserlösung zu N₂ durch eine Reduktionsreaktion. Das aus dem Katalysator austretende Abgas kann nach einem eventuellen weiteren Abkühlungsschritt in die Umgebung abgelassen werden, sollte es keine anderen Komponenten aufweisen, die einer separaten Nachbehandlung bedürfen.

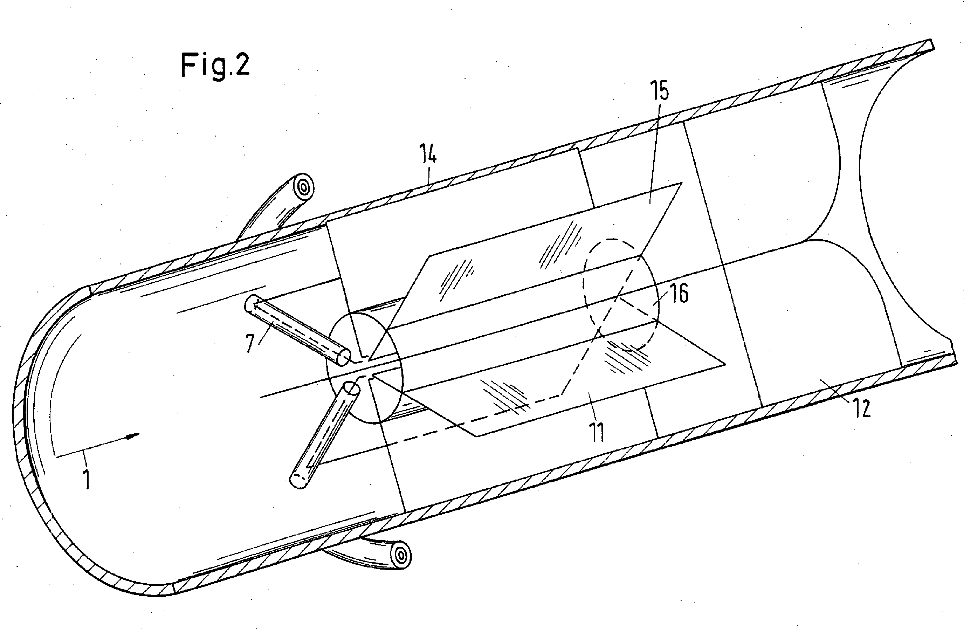

Fig. 2 zeigt ein erstes Ausführungsbeispiel einer Anordnung von Dosierelementen 7, einen Filmverdampfer 11, sowie einen Mischer 12 in einem geschlossenen Kanal 14, durch welchen der Abgasstrom 1 geleitet wird. Der Kanal ist teilweise aufgeschnitten, um die Einbauten sichtbar zu machen. Jedes Dosierelement 7 ist als Rohr ausgebildet, welches über eine oder mehrere Austrittsöffnungen verfügt, die in dieser Fig. nicht dargestellt werden. Durch die Austrittsöffnungen gelangt ein flüssiges Reaktionsmittel, das heisst, die Harnstoff-Wasserlösung, auf die Oberflächen des Verdampfers 11. Der Verdampfer enthält eine Mehrzahl von Leitelementen (15,16), die insbesondere als dünnwandige Leitelemente ausgebildet sind und sich in Strömungsrichtung derart erstrecken, dass sie möglichst geringen Strömungswiderstand bieten. Die Leitelemente 15 sind an ihren äusseren Kanten auf der inneren Oberfläche des Kanals 14 befestigt, beispielsweise durch eine Schweissverbindung. Zur Erhöhung der Formstabilität sowie zur Verbesserung des Wärmeaustauschs zwischen den radialen Leitelementen werden die Leitelemente 15 von einem ringförmigen Leitelement 16 durchsetzt, welches insbesondere als zum Kanal 14 konzentrisches Rohr ausgebildet ist. Durch die Leitelemente wird der Kanalquerschnitt somit in eine Vielzahl von möglichst ähnlich gestalteten Kanalsegmenten unterteilt. Die Oberflächen der Leitelemente erstrecken sich dabei bevorzugt in Strömungsrichtung, was minimalen Druckverlust des Filmverdampfers zur Folge hat. Im dargestellten Ausführungsbeispiel sind die Leitelemente 15 als ebene Flächen dargestellt. Zur Vergrösserung der Wärmeaustauschfläche bei allenfalls unwesentlicher Steigerung des Druckverlustes können auch Leitelemente mit Oberflächenstrukturen vorgesehen werden, wie beispielsweise Zick-Zackprofilen oder wellenförmigen Strukturen. Die Kämme (Wellenberge oder Kanten bei Zick-Zackprofilen) sind vorzugsweise in Strömungsrichtung ausgerichtet, können aber auch um einen Winkel zur Strömungsrichtung geneigt sein, wenn dies keine wesentliche Erhöhung des Druckverlusts zur Folge hat

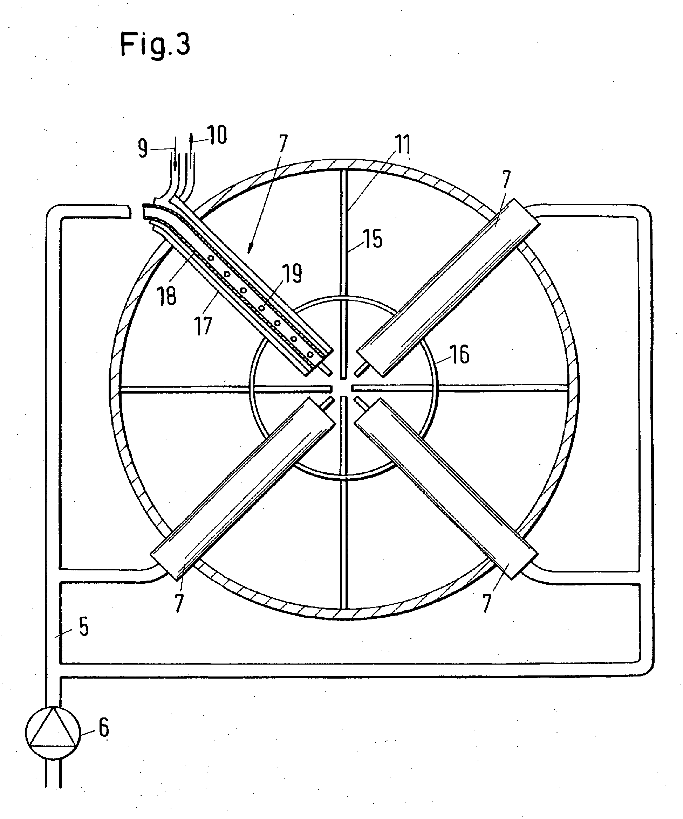

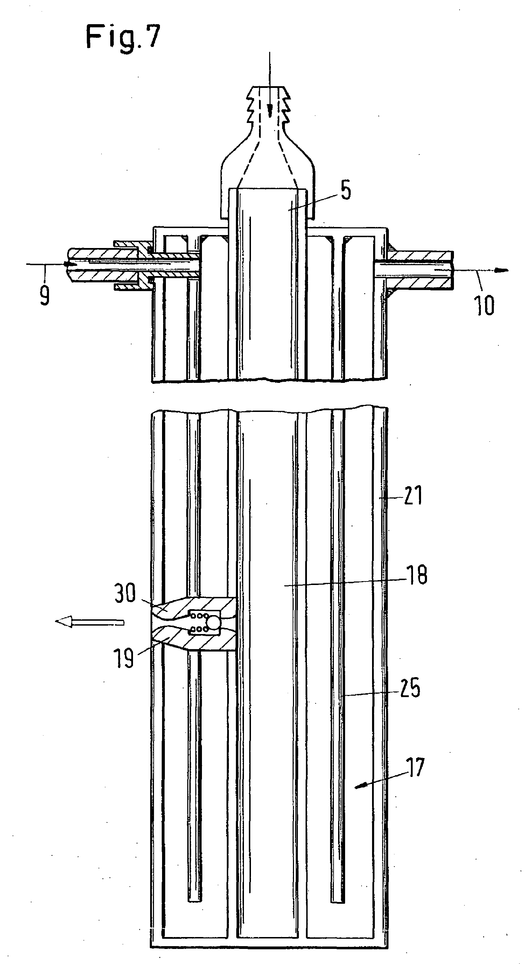

Fig. 3 zeigt eine Ansicht der Dosierelemente 7 und des Filmverdampfers 11 gemäss des ersten Ausführungsbeispiels in einer Ansicht in Strömungsrichtung des Abgases. Eines der Dosierelemente ist aufgeschnitten, um den prinzipiellen Aufbau eines Dosierelements zu verdeutlichen. Das Dosierelement 7 umfasst einen Kanal 18 zur Bereitstellung des Harnstoff-Wassergemischs, einen Kühlmantel 17, in welchem ein Kühlmittel zirkuliert. Das Kühlmittel wird über eine Kühlmittelleitung 9 zugeführt und über eine Kühlmittelleitung 10 abgeführt. Kanal 18 ist eine Fortsetzung der Zuleitung 5 für das Harnstoff-Wassergemisch, welches aus dem Reservoir 4 entnommen oder mittels einer Pumpe 6 gefördert wird. Das Harnstoff-Wassergemisch wird mittels Verteilelementen 19 auf die Oberfläche der Leitelemente 15 verteilt. Handelt es sich bei den Verteilelementen 19 um Düsen 30 (siehe Fig. 7), wird das Harnstoff-Wassergemisch als Sprühnebel auf die Oberfläche der Leitelemente 15 aufgetragen. Der Sprühnebel benetzt diese Oberfläche und es kann zur Ausbildung von zusammenhängenden Flüssigkeitsfilmen oder Rinnsalen kommen. Die Oberfläche, die benötigt würde, um die Energie zur Verdampfung der Flüssigkeit mittels Wärmeübergang aus dem heissen Abgas direkt in den Flüssigkeitsfilm zu übertragen, ist relativ gross. Den Flüssigkeitsfilm bei der gegebenen kleinen Flüssigkeitsbelastung auf die Oberfläche zu verteilen, d.h. die Fläche vollständig zu benetzen, ist jedoch schwierig. Aufgrund der guten Wärmeleitung des Verdampfers wird die Wärme indirekt zuerst aus dem Abgas in den Verdampfer übertragen, durch Wärmeleitung innerhalb der Verdampferstruktur zum Rinnsal transportiert und dort in das Rinnsal eingeleitet, das auf der Oberfläche des Leitelements fliesst. Ein derartiger Verdampfer funktioniert auch dann, wenn der Flüssigkeitsfilm nur einen sehr kleinen Teil der Oberfläche des Leitelements 15 und/oder des ringförmigen Leitelements 16 benetzt. Der Verdampfer sollte so gestaltet sein, dass die Leitelemente (15,16) einerseits eine grosse Oberfläche für den Wärmeübergang vom Abgas in den Verdampferkörper aufweisen, der von den Leitelementen (15, 16) ausgebildet ist, beispielsweise durch eine geeignete Rippenanordnung und/oder durch die in Zusammenhang mit Fig. 2 erwähnten oberflächenvergrössernden Strukturen. Andererseits sollten die Leitflächen (15,16) so gestaltet sein, dass die Wärmeleitung im im Verdampfer nur über kurze Strecken erfolgen muss. Sämtliche Oberflächen der Leitelemente des Verdampfers sind im Wesentlichen in Strömungsrichtung ausgerichtet, damit der Strömungswiderstand des Verdampferkörpers als Ganzes gering bleibt. Die Querschnitte der Strömungskanäle, die sich durch den Verdampferkörper bilden, sind nach einem besonders bevorzugten Ausführungsbeispiel über den Gesamtquerschnitt des Kanals 14 möglichst in gleichmässigen Abständen zueindander verteilt, damit der Filmverdampfer - als Hindernis, welches vom im Kanal strömenden Abgas umströmt werden muss - nicht zu einer einseitigen Strömungsverteilung im Abgaskanal führt. Die Oberfläche des Leitelements, auf der der Harnstoff-Wasserfilm fliesst, ist bevorzugt horizontal nach oben ausgerichtet, damit sich nicht, aufgrund der Wirkung der Schwerkraft, Tropfen bilden und lösen können. Die Oberfläche der Gesamtheit der Leitelemente des Verdampfers ist insbesondere so gross zu wählen, dass die Wärmeübertragungsfunktion problemlos gewährleistet werden kann. Andererseits ist vorzugsweise das Volumen und der blockierte Anteil des Querschnittes so klein wie möglich bzw. der hydraulische Durchmesser so gross wie möglich zu wählen, damit der Strömungswiderstand des Verdampfers gering bleibt.

Der Teil des Verdampfers, auf dem der Film fliesst, kann mit einem Hydrolysekatalysator beschichtet werden, der für eine bevorzugte Umwandlung der Harnstoff-Wasserlösung in NH₃ und CO₂ sorgt.

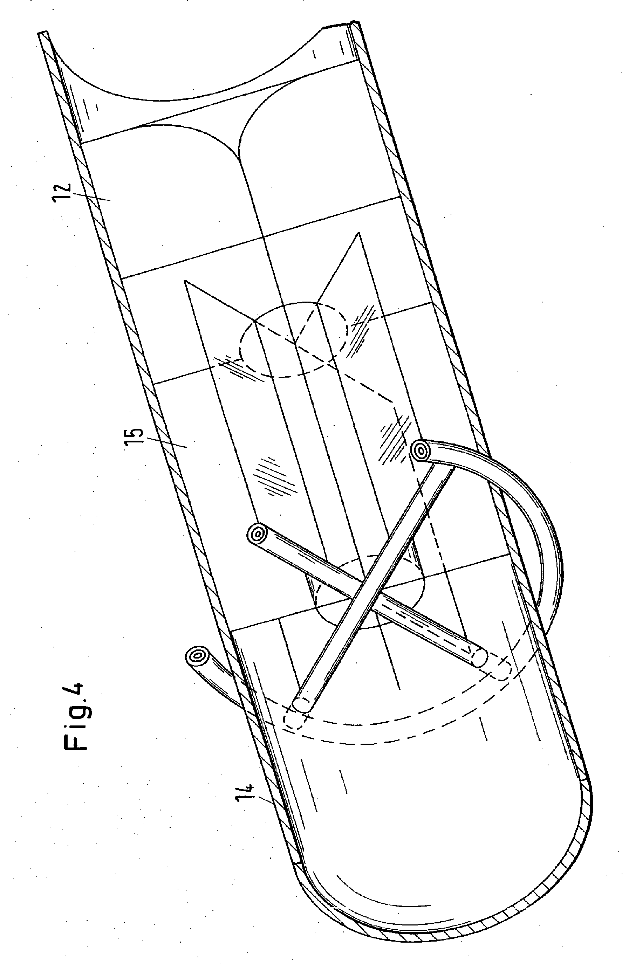

Fig. 4 zeigt eine weitere Kombination von Dosierelement 7 mit einem Filmverdampfer 11. Im Unterschied zum Ausführungsbeispiel gemäss Fig. 2 oder 3 ist das Dosierelement 7 nicht als in den Kanal 14 ragender Arm ausgestaltet, sondern durchläuft den Kanal 14. Mehrere derartige Dosierelemente können kreuzweise oder parallel zueinander (nicht dargestellt) angeordnet sein. Verteilelemente, die in dieser Darstellung nicht sichtbar sind, leiten das flüssige Reaktionsmittel auf die Oberflächen der Leitelemente 15 und/oder der Leitelemente 16.

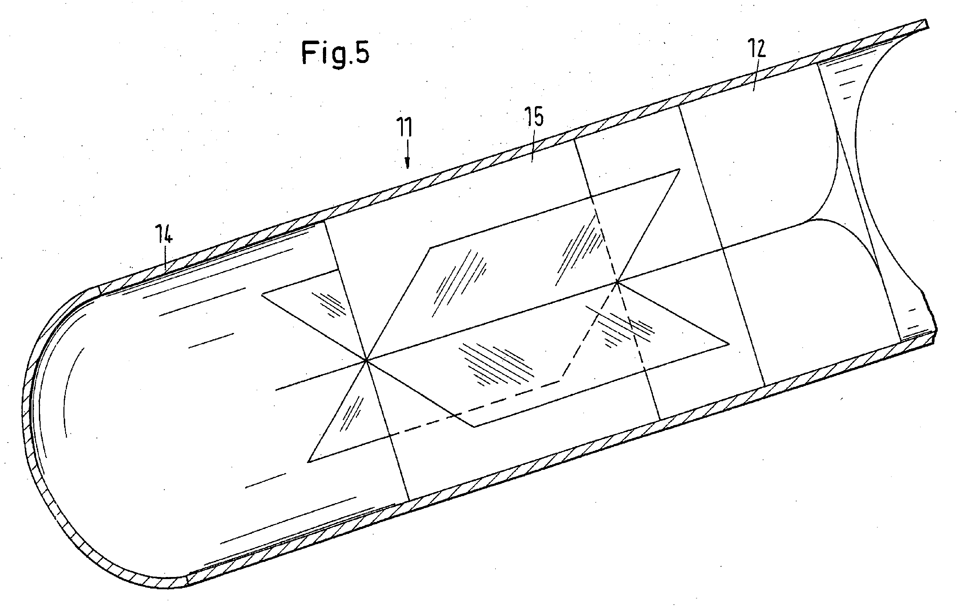

In der Darstellung gemäss Fig. 5 werden die Leitelemente 15 des Filmverdampfers sternförmig angeordnet und zentral durch ein sich auf der Achse des Kanals 14 befindliches Halteelement oder eine Verbindung mit der Wand des Kanals 14 in ihrer Lage fixiert. Wahlweise können die Leitelemente auch an der Innenwand des Kanals 14 befestigt sein.

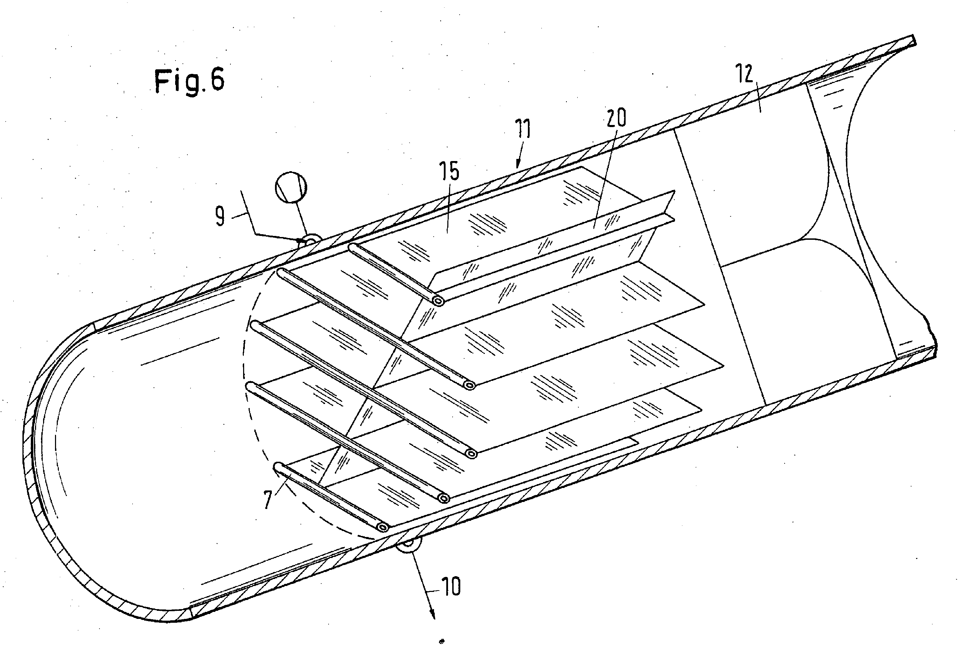

Fig. 6 zeigt ein weiteres Ausführungsbeispiel für einen Filmverdampfer 11 und sowie eine zugehörige Anordnung von Dosierelementen 7. Der Filmverdampfer 11 umfasst eine Mehrzahl von sich in Strömungsrichtung erstreckenden Leitelementen 15. Vorzugsweise sind die Leitelemente zueinander parallel und in im Wesentlichen gleichen Abständen zueinander angeordnet. Zumindest ein Stützelement 20 kann vorgesehen sein, damit der Abstand der Leitelemente sich im Betrieb nicht verändert. Dosierelemente 7 sind unmittelbar stromaufwärts zumindest eines Teils der Leitelemente 15 angeordnet. Mittels der Dosierelemente wird zumindest eine Oberfläche der Leitelemente mit flüssigem Reaktionsmittel benetzt, sodass sich ein Film oder ein Rinnsal ausbildet. Nach einer bevorzugten Anordnung sind die Leitelemente im wesentlichen horizontal angeordnet, sodass sich der Film auf der oberen Oberfläche des Leitelements ausbildet. Durch die Strömung des Abgases wird der Film entlang der Oberfläche vorwärts getrieben und verdampft durch den Wärmeübergang vom Leitelement zum Film durch Wärmeleitung und dem Wärmeübergang durch Konvektion auf der filmseitigen Oberfläche.

Der Film, bzw. das Rinnsal kann auf unterschiedliche Weise erzeugt werden. Einerseits kann Flüssigkeit mittels einer Düse zerstäubt werden oder als Strahl in Richtung des Verdampfers gespritzt werden und auf der Oberfläche des Verdampfers abgeschieden werden. Ein Ausführungsbeispiel für ein Dosierelement mit Verteilelementen 19, die als Düse 30 ausgebildet sind, ist in der Fig. 7 gezeigt. Das Verteilelement 19 kann auch Mittel zur Zerstäubung des flüssigen Reaktionsmittels umfassen. Das Dosierelement 7 ragt gemäss des in den Fig. 2 und Fig. 3 gezeigten Ausführungsbeispiels in die Strömung des Abgases und umfasst einen Kanal 18, einen Kühlmantel 17, sowie zumindest ein Verteilelement 19. Im Inneren des Kühlmantels 17 wird das Kühlmittel auf einem im wesentlichen U-förmig verlaufenden Weg vom Eintritt durch Kühlmittelleitung 9 bis zum Austritt in Kühlmittelleitung 10 geführt. Die Kühlmittelkanäle werden somit durch zwei konzentrisch um den in einem inneren Rohr 20 verlaufenden Kanal 18 angeordnete Rohre 21, 25 ausgebildet. Durch die Mantelflächen der Rohre (20,21,25) wird somit der Kühlmittelkanal begrenzt. Da der Kühlmittelkanal um den Kanal 18 herum angeordnet ist, werden für das oder die Verteilelemente 19 Bohrungen vorgesehen, in welche die Verteilelemente 19 aufgenommen werden. Gemäss einer nicht dargestellten Variante kann der Kühlmittelkanal den Kanal und/oder das Verteilelement nur teilweise umfassen, wenn das Verteilelement eine Düse 30 (siehe Fig. 7) umfasst. Das Verteilelement lenkt die Strömung des flüssigen Reaktionsmittels auf die Oberfläche der Leitelemente 15, wie in Fig. 3, Fig. 4 oder Fig. 5 (ohne Dosierelemente) dargestellt wurde.

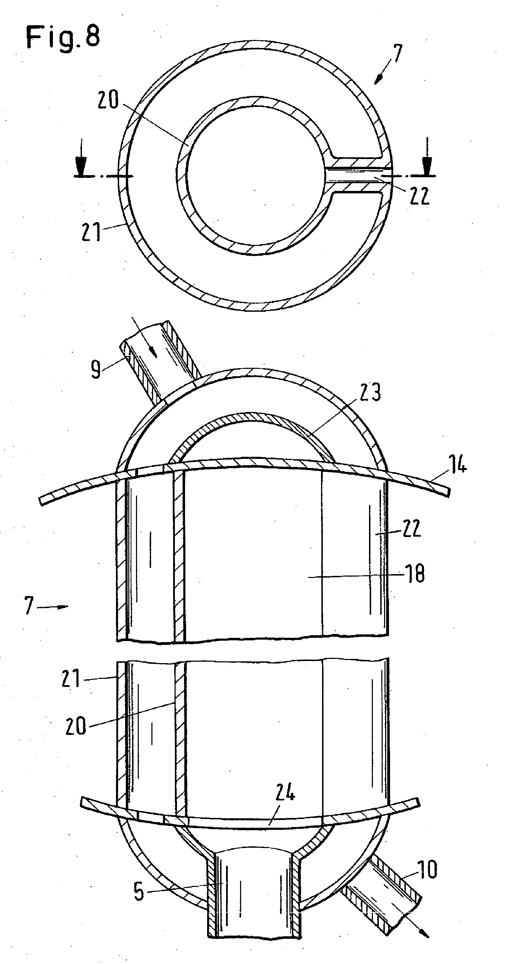

Andererseits kann die Flüssigkeit direkt mittels einer Zuleitung ans Kopfende des Verdampfers geleitet werden und dort ein Film erzeugt werden. Ein Ausführungsbeispiel für ein zugehöriges Dosierelement ist in Fig. 8 gezeigt. Dieses Dosierelement kann beispielsweise in einer Anordnung gemäss Fig. 6 zum Einsatz kommen. Das Dosierelement 7 ist im oberen Teil der Fig. 8 in einem Schnitt gezeigt. Im unteren Teil der Fig. 8 ist ein Längsschnitt des Dosierelements gezeigt. Das Dosierelement 7 umfasst zwei konzentrisch zueinander angeordnete Rohre (20,21). Das innere Rohr 20 enthält den Kanal 18, der vom flüssigen Reaktionsmittel durchströmt wird. Das flüssige Reaktionsmittel tritt über die Zuleitung 5 in den Kanal 18 ein und verlässt den Kanal über die Öffnung 22, die insbesondere als Schlitz ausgebildet ist, in Richtung des Filmverdampfers 11, der in Fig. 8 nicht dargestellt ist. Die Zuleitung 5 mündet in einen ringförmig um den Kanal 14 angeordneten Kanal 23, welcher der Verteilung des flüssigen Reaktionsmittels über den Umfang dient. Hierdurch gelangt flüssiges Reaktionsmittel in die Anordnung von Dosierelementen, wie sie in Fig. 6 gezeigt wurde. An allen Stellen, an welchen ein Dosierelement angebracht ist, enthält der Kanal 14 eine Bohrung 24, sodass flüssiges Reaktionsmittel in das Dosierelement 7 eintreten kann. Um die flüssiges Reaktionsmittel führenden Kanäle (18,23) ist ein Kühlmittelkanal angeordnet. Der Kühlmittelkanal umfasst einen Ringkanal, welcher um den ringförmigen Kanal 23 angeordnet ist, sowie den Zwischenraum zwischen äusserem und innerem Rohr 20. Das Kühlmittel wird über die Kühlmittelleitung 9 zugeführt und über die Kühlmittelleitung 10 abgeführt.

Wenn der Verdampfer nur zu einem kleinen Teil durch den Film der Harnstoff-Wasserlösung benetzt wird oder das Strömungsprofil ungleichmässig ist, ist das dort generierte Verhältnis zwischen Ammoniak und NOx nicht über den gesamten Querschnitt des Kanals 14 konstant. In diesem Fall wird dem Filmverdampfer 11 ein geeigneter statischer Mischer 12 nachgeschaltet. Der statische Mischer intensiviert die vorhandene Turbulenz im Kanal 14 und generiert zusätzlich intensive, grosse Wirbel, die die grossräumige Verteilung des Reaktionsmittels, also insbesondere des sich aus der Harnstoff-Wasserlösung bildenden Ammoniaks quer zur Hauptströmungsrichtung unterstützen. Verschiedene Konstruktionen für derartige Mischer kommen in Frage. Besonders günstig bezüglich des Druckverlustes sind statische Mischer, die keine Strömungsablösung bewirken. Ein Beispiel eines Mischers mit besonders günstigem Druckverlust ist in DE 195 39 923 C1 beschrieben. Hier werden Wirbelerzeugende Flächen so angeordnet, dass sie keinerlei Strömungsablösung aufweisen. Für Abgaskanäle können jedoch jeweils nur eine beschriebene Leitblechanordnung eingesetzt werden, die einen grossen Wirbel im Kanal erzeugt und dadurch eine Vermischung über den Umfang und den gesamten Rohrquerschnitt bewirkt. Falls das Abgasrohr zwischen dem Verdampfer und dem Katalysator Krümmer ausweist, kann die durch diese Krümmer generierte Sekundärströmung für die Mischung mitgenutzt werden. Eine mit Drall behaftete Rohrströmung, die durch einen Krümmer geleitet wird, hat ausserdem einen geringeren Druckverlust als eine drallfreie Rohrströmung durch denselben Krümmer. Ein Mischer, der einen grossen Wirbel und damit einen Drall in der Rohrströmung erzeugt, könnte deswegen den Druckverlust der Abgasströmung hinter dem Verdampfer evt. sogar reduzieren.

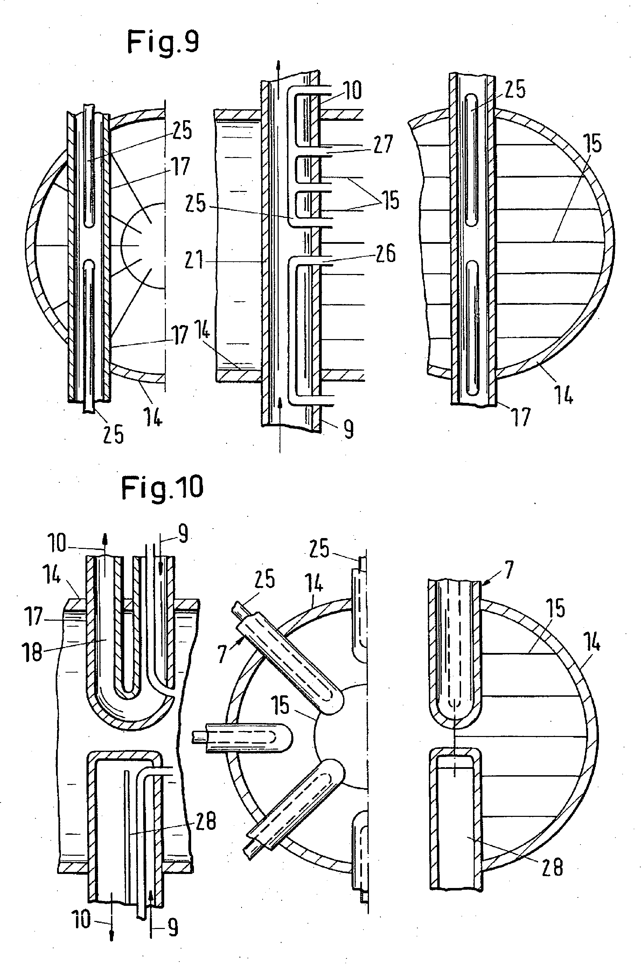

Fig. 9 zeigt ein weiteres Ausführungsbeispiel für ein Dosierelement. Das Dosierelement ist als ein sich zwischen zwei gegenüberliegenden Öffnungen in der Wand des Kanals 14 erstreckendes Rohr 21 ausgebildet. Das Dosierelement enthält in seinem inneren zumindest eine Kapillare 25, mittels welcher ein flüssiges Reaktionsmittel, insbesondere eine Harnstoff-Wasserlösung, auf ein Leitelement 15 verteilt wird. Hierzu kann die die Kapillare eine Krümmung 26 an der Stelle aufweisen, an welcher das flüssige Reaktionsmittel austritt, wodurch das flüssige Reaktionsmittel in einem Winkel auf das Leitelement auftrifft, sodass das flüssige Reaktionsmittel das Leitelement benetzt. Der linke Teil der Fig. 9 und der rechte Teil der Fig. 9 zeigen zwei verschiedene Anordnungen der Leitelemente, welche den in Fig. 2 bzw. Fig. 6 gezeigten Anordnungen entsprechen. Des weiteren ist im linken Teil der Fig. 9 dargestellt, dass die Kapillaren 25 und die sie umgebenden Kühlmäntel 17 nicht mittig angeordnet zu sein brauchen. Der mittlere Teil der Fig. 9 zeigt einen Ausschnitt aus einem Längschnitt durch den Kanal 14. Dabei sind jeweils 2 Kapillaren mit mehreren Austrittsöffnungen 27 gezeigt.

Fig. 10 zeigt weitere mögliche Ausführungsbeispiele für flüssiges Reaktionsmittel enthaltende Kapillaren 25, deren Kühlmäntel 17 sowie deren Anordnung im Kanal 14. Der linke Teil der Fig. 10 entspricht dabei dem mittleren Teil der Fig. 9, wobei die Leitelemente in dieser Darstellung weggelassen wurden. Eine oder eine Mehrzahl von Kapillaren 25 verläuft in einem einen Kanal 18 ausbildenden Kühlmantel 17. Gemäss der oben dargestellten Variante weist der Kanal 18 U-Form auf. Kühlmittel wird dem Dosierelement über die Kühlmittelleitung 9 zugeführt und verlässt das Dosierelement über Kühlmittelleitung 10. In der unten dargestellten Variante ist anstatt eines u-förmig gebogenen Rohrs ein Kanal 18 gezeigt, der eine mittig angeordnete Trennwand 28 aufweist. Der mittlere und rechte Teil der Fig. 10 zeigen Ansichten einer Hälfte des Kanals 14 in Strömungsrichtung mit Dosierelement 7 und Leitelement 15. Wie in Fig. 9 sind zwei verschiedene Anordnungen von Leitelementen dargestellt, sowie verschiedene Anordnungen von Dosierelementen 7. Der mittlere Teil der Fig. 10 zeigt ringförmig am Umfang des Kanals 14 verteilte Dosierelemente, die in den Kanal hineinragen und nach Fig. 3, Fig. 7 oder Fig. 10, linker Teil ausgeführt sein können. Wie in Fig. 9 kann ein Dosierelement 7 eine Mehrzahl von Kapillaren 25 oder Kapillaren mit einer Mehrzahl von Austrittsöffnungen umfassen. Fig. 10, rechter Teil, zeigt auch die Kombination verschiedener Typen von Dosierelementen 7 in einem Kanal 14. Beispielsweise kann ein Dosierelement umfassend einen Kühlmantel 17, der als U-förmiger Kanal 18 ausgestaltet ist mit einem Dosierelement, welches einen Kühlmantel 17 mit einem Kanal 18, der eine Trennwand 28 enthält, kombiniert werden.

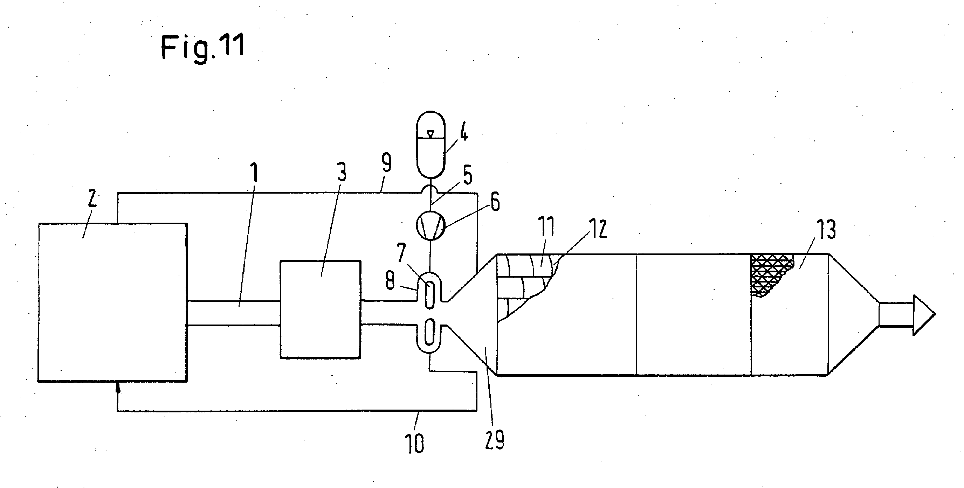

Fig. 11 zeigt ein weiteres Ausführungsbeispiel, nach welchem der Filmverdampfer 11 als Mischer mit einer Kreuzkanalstruktur, wie er in DE 2 205 371 beschrieben wird, ausgebildet ist. Ein derartiger Mischer enthält mindestens ein Mischelement, welches von fluiden Medien im Gleichstrom durchsetzt wird. Das Mischelement umfasst einander sich berührende, Strömungskanäle ausbildende Lagen. Die Längsachsen der Strömungskanäle innerhalb einer Lage verlaufen mindestens gruppenweise im wesentlichen zueinander parallel. Die Strömungskanäle von jeweils mindestens zwei benachbarten Lagen sind mindestens teilweise gegeneinander geöffnet. Die Längsachsen der Strömungskanäle von benachbarten Lagen sind nach einem vorteilhaften Ausführungsbeispiel gegeneinander geneigt. Die Lagen benachbarter Mischelemente können gegeneinander um einen Winkel um die Längsachse des Mischers geneigt sein. Bezüglich der Komponenten des Abgasreinigungssystems, die gegenüber der Fig. 1 nicht verändert wurden, wird auf die Beschreibung zu Fig. 1 verwiesen. Filmverdampfer 11 und Mischer 12 werden somit zu einem Bauteil zusammengefasst, welches sich zwischen dem stromaufwärts angeordneten Dosierelement 7 und dem stromabwärts angeordneten Katalysator 13 befindet. In der Darstellung der Fig. 11 ist zwischen dem Dosierelement 7 und dem Filmverdampfer 11 ein Diffusor angeordnet. Der Diffusor 29 kann Leitelemente enthalten, denen ebenfalls die Funktion eines Filmverdampfers zukommen kann. Nach einer anderen, nicht dargestellten Variante, befindet sich das Dosierelement unmittelbar vor dem Filmverdampfer stromabwärts des Diffusors. Die Anordnung gemäss Fig. 11 hat den weiteren Vorteil, dass die Anordnung des kombinierten Mischers und Filmverdampfers unmittelbar vor dem Katalysator 13 erfolgen kann und somit ein grösserer Querschnitt zur Verfügung steht, wodurch der Druckverlust deutlich reduziert werden kann. Mittels eines Mischers/Verdampfers (11,12) mit Kreuzkanalstruktur ist eine innige Vermischung des verdampften Reaktionsmittels mit dem Abgasstrom erzielbar, sodass auf einen Zwischenraum zwischen dem Mischer/Verdampfer (11, 12) und dem Katalysator verzichtet werden kann. Mittels der Dosierelemente 7 wird auf den Mischer/Verdampfer ein Flüssigkeitsfilm aufgebracht, der dort verdampft und gleichzeitig vermischt wird. Die Ausführungsvarianten gemäss Fig. 11 sind mit den in Zusammenhang mit den Fig. 1 bis 10 beschriebenen Ausführungsvarianten für die Anordnung, den Typ oder die Anzahl der Dosierelemente sowie mit den Ausführungsvarianten für die Filmverdampfer beliebig kombinierbar.

In allen Fällen muss dabei die Konstruktion so gewählt werden, dass sämtliche Flüssigkeit ausschliesslich auf den Verdampfer gelangt und von dort durch die Strömung keine Tropfen abgerissen werden können. Das bei der Lösung mit der Zerstäubungsdüse sicherzustellen, ist nicht einfach.

Falls die Harnstoff-Wasserlösung mittels einer Leitung direkt zum Verdampfer geleitet wird, sollte diese Leitung gut mittels eines separaten Kreislaufes temperiert werden und zusätzlich evt. isoliert werden, da unter allen Umständen verhindert werden muss, dass die Harnstoff-Wasserlösung schon innerhalb der Dosierelemente verdampft. Zur Kühlung kann z.B. ein Teil des Kühlwasserkreislaufs des Motors abgezweigt und durch diese Leitung zirkuliert werden. Die Dosierung von Harnstoff-Wasserlösung erfolgt nach einem vorteilhaften Ausführungsbeispiel mittels eines als Dosierstift ausgebildeten Dosierelements, der direkt vom Rand des den geschlossenen Kanal ausbildenden Auspuffrohres an den Dosierpunkt auf der Oberfläche eines Leitelements des Filmverdampfers zeigt, wodurch ein Flüssigkeitsfilm auf diese Oberfläche aufgebracht wird. Der Dosierstift umfasst ein konzentrisches Doppelrohr für das Kühlwasser. Das Kühlwasser fliesst im Inneren der Rohre zum Dosierpunkt und wird dort umgelenkt und durch den Spalt zwischen äusserem und innerem Rohr zurückgeführt. Die eigentliche Leitung für die Harnstoff-Wasserlösung kann wegen der geringen Durchsätze als Kapillare innerhalb der gekühlten Leitung realisiert werden. Der Durchsatz lässt sich mittels einer einfachen Pumpe steuern. Um eine gute Vorverteilung des Ammoniaks im Abgaskanal zu bewirken, können auch an mehreren Stellen Rinnsale auf dem Verdampfer generiert werden. Hierfür werden insbesondere mehrere, am Umfang des Kanals verteilte Dosierelemente vorgesehen. Falls die Zuleitung zu den Dosierelementen durch den Motorkühlkreislauf temperiert wird, sollte auch sichergestellt sein, dass dabei keine Probleme mit Verstopfung der Kapillaren für die Dosierung entstehen. Wenn die gesamte Dosierung über eine einzige Pumpe aber ein ganzes Bündel von Kapillaren erfolgen soll, so kann über die Länge der einzelnen Kapillaren der Volumenstrom in den verschiedenen Dosierpunkten gesteuert werden.

## Patentansprüche

1. Abgasreinigungssystem für NOx enthaltende Abgase, umfassend einen geschlossenen Kanal (14), in welchem ein NOx enthaltender Abgasstrom von einer Abgasquelle (2) zu einem Katalysator (13) geleitet wird, wobei stromaufwärts des Katalysators (13) ein Dosierelement (7) zur Einleitung eines flüssigen Reaktionsmittels in den Abgasstrom in dem geschlossenen Kanal vorgesehen ist, **dadurch gekennzeichnet, dass** stromabwärts des Dosierelements (7) ein Filmverdampfer (11) angeordnet ist, der im Abgasstrom angeordnete Oberflächen (15,16) aufweist, auf welche das flüssige Reaktionsmittel aufgebracht wird und an dessen Oberflächen (15,16) das flüssige Reaktionsmittel verdampft wird, bevor das verdampfte Reaktionsmittel auf den Katalysator (13) trifft wobei ein Wärmeübergang vom Abgasstrom auf die Oberflächen (15, 16) erfolgt, wobei der Filmverdampfer die benötigte Energie direkt aus dem Abgasstrom bezieht, wobei das Dosierelement als ein Rohr mit einer Mehrzahl von Dosieröffnungen ausgebildet ist, durch die das flüssige Reaktionsmittel auf die Oberflächen des Filmverdampfers geleitet wird.

2. Abgasreinigungssystem nach Anspruch 1 , wobei zwischen Abgasquelle (2) und Dosierelement (7) ein Partikelfilter (3) angeordnet ist.

3. Abgasreinigungssystem nach einem der vorhergehenden Ansprüche, wobei stromabwärts des Filmverdampfers (11) ein Mischer (12) angeordnet ist.

4. Abgasreinigungssystem nach Anspruch 3, wobei der Mischer (12) ein statisches Mischelement umfasst.

5. Abgasreinigungssystem nach einem der vorhergehenden Ansprüche, wobei der Verdampfer (11) gleichzeitig als Mischer ausgebildet ist.

6. Abgasreinigungssystem nach einem der vorhergehenden Ansprüche, wobei der Verdampfer (11) und/oder der Mischer (12) eine Kreuzkanalstruktur aufweisen.

7. Abgasreinigungssystem nach einem der vorhergehenden Ansprüche, wobei die Oberflächen (15, 16) des Verdampfers (11) aus thermisch gut leitfähigem Material bestehen.

8. Abgasreinigungssystem nach Anspruch 7, wobei das thermisch gut leitfähige Material einen Stahl, der gegebenenfalls Legierungselemente enthält, einen anderen metallischen Werkstoff, eine Kupferlegierung oder eine Keramik hoher Wärmeleitfähigkeit umfasst.

9. Abgasreinigungssystem nach einem der vorhergehenden Ansprüche, wobei die Oberflächen des Verdampfers eine Mehrzahl von Leitelementen (15,16) umfassen, die im wesentlichen entlang der Hauptströmungsrichtung des Abgasstroms angeordnet sind.

10. Abgasreinigungssystem nach Anspruch 9, wobei zumindest ein Teil der Leitelemente (15,16) berippt ist.

11. Abgasreinigungssystem nach Ansprüchen 9 oder 10, wobei die Leitelemente (15) sternförmig um ein in einer zentralen Lage des Kanals angeordnetes Leitelement (16) ausgerichtet sind.

12. Abgasreinigungssystem nach einem der vorhergehenden Ansprüche, wobei zumindest ein Teil der Oberflächen katalytisch wirksam ist.

13. Abgasreinigungssystem nach Anspruch 12, wobei die katalytisch wirksamen Oberflächen hydrolysekatalytisch wirksame Oberflächen umfassen.

14. Abgasreinigungssystem nach einem der vorhergehenden Ansprüche, wobei ein oder eine Mehrzahl von Dosierelementen (7) in den Kanal (14) ragt.

15. Abgasreinigungssystem nach einem der vorhergehenden Ansprüche, wobei das Dosierelement (7) eine Zuleitung (5) zur Einleitung eines flüssigen Reaktionsmittels in den Abgasstrom und ein Verteilelement (19) zur Verteilung des flüssigen Reaktionsmittels auf die Oberfläche des Verdampfers enthält.

16. Abgasreinigungssystem nach Anspruch 15, wobei das Verteilelement (19) als eine Kapillare (25) mit einer Austrittsöffnung (27) oder eine Düse (30) ausgebildet ist.

17. Abgasreinigungssystem nach Anspruch 16, wobei im Bereich der Austrittsöffnung (27) eine Krümmung (26) vorgesehen ist.

18. Abgasreinigungssystem nach einem der vorhergehenden Ansprüche 15 bis 17, wobei die Zuleitung (5) eine Mehrzahl von Verteilelementen (19) speist.

19. Abgasreinigungssystem nach einem der vorhergehenden Ansprüche 15 bis 18, wobei das Dosierelement Mittel umfasst, um das vorzeitige Verdampfen des flüssigen Reaktionsmittels zu verhindern.

20. Abgasreinigungssystem nach Anspruch 19, wobei das Mittel als eine thermische Isolierung gegenüber der Abgasströmung ausgebildet ist.

21. Abgasreinigungssystem nach nach Anspruch 19, wobei das Mittel als ein thermoelektrisches Peltier-Kühlelement zur Kühlung des flüssigen Reaktionsmittels ausgebildet ist.

22. Abgasreinigungssystem nach einem der vorhergehenden Ansprüche 15 bis 21, wobei das Dosierelement (7) von einem Kühlmantel (17) umgeben ist, der als Kanal (18) ausgebildet ist, der eine Kühlmittelleitung (9) zur Zufuhr von Kühlmittel sowie eine Kühlmittelleitung (10) zur Abfuhr von Kühlmittel enthält.

23. Abgasreinigungssystem nach Anspruch 22, wobei der Kanal (18) als zylindrisches Rohr ausgebildet ist, in welchem das Verteilelement (19) angeordnet ist, wodurch das Verteilelement (19) allseitig von einem Kühlfluid umströmbar ist.

24. Abgasreinigungssystem nach einem der Ansprüche 22 oder 23, wobei der Kanal (18) U-förmig ausgestaltet ist.

25. Abgasreinigungssystem nach einem der vorhergehenden Ansprüche 22 bis 24, wobei der Kanal (18) eine Trennwand (28) aufweist.

26. Abgasreinigungssystem nach einem der vorhergehenden Ansprüche 22 bis 25, wobei der Kanal (18) von zwei konzentrisch ineinander verlaufenden Rohren (21,25) begrenzt wird.

27. Abgasreinigungssystem nach einem der vorhergehenden Ansprüche, wobei das flüssige Reaktionsmittel eine Harnstoff-Wasserlösung umfasst.

28. Verwendung des Abgasreinigungssystems nach einem der vorhergehenden Ansprüche in einem Fahrzeug.

29. Verfahren zur Reinigung von Abgasen, welche NOx enthalten, unter Verwendung eines Abgasreinigungssystems nach einem der vorhergehenden Ansprüche, umfassend die Schritte der Einleitung eines NOx enthaltenden Abgasstroms von einer Abgasquelle (2) in einen Kanal (14), Einleiten eines flüssigen Reaktionsmittels in den Abgasstrom durch ein Dosierelement (7), Verdampfen des flüssigen Reaktionsmittels auf einer Oberfläche (15, 16) eines Filmverdampfers (11), wobei Wärme vom Abgasstrom auf die Oberflächen (15,16) übertragen wird, wobei der Filmverdampfer die benötigte Energie direkt aus dem Abgasstrom bezieht, Reaktion des verdampften Reaktionsmittels mit NOx in einem Katalysator (13),

30. Verfahren nach Anspruch 29, wobei ein Vermischen des mit verdampftem Reaktionsmittel beladenen Abgasstroms in einem Mischer erfolgt.

31. Verfahren nach einem der Ansprüche 29 oder 30, wobei in dem Katalysator (13) NOx mit dem in der Gasmischung enthaltenen Ammoniak in Gegenwart von Sauerstoff zu N₂ reduziert wird.

## Claims

1. An exhaust gas cleaning system for NOₓ containing exhaust gases, including a closed passage (14) in which an NOₓ containing flow of exhaust gas is conveyed from an exhaust gas source (2) to a catalytic converter (13), wherein a metering element (7) is provided upstream of the catalytic converter (13) for the introduction of a liquid reaction medium into the flow of exhaust gas, **characterised in that** a film vaporiser (11) is arranged downstream of the metering element (7) in the closed passage having surfaces (15, 16) arranged in the flow of exhaust gas onto which the liquid reaction medium is applied and at the surfaces (15, 16) of which the liquid reaction medium is vaporised before the evaporated reaction medium meets the catalytic converter (13) wherein a heat transfer from the flow of exhaust gas to the surfaces (15, 16) occurs, whereby the film vaporiser receives the required energy directly from the flow of exhaust gas, wherein the metering element is formed as a tube comprising a plurality of metering openings, through which the liquid reaction medium is guided onto the surfaces of the film vaporiser.

2. An exhaust gas cleaning system in accordance with claim 1, wherein a particle filter (3) is arranged between the exhaust gas source (2) and the metering element (7).

3. An exhaust gas cleaning system in accordance with any one of the previous claims wherein a mixer (12) is arranged downstream of the film vaporiser (11).

4. An exhaust gas cleaning system in accordance with claim 3, wherein the mixer (12) includes a static mixer element.

5. An exhaust gas cleaning system in accordance with any one of the previous claims wherein the vaporiser (11) is simultaneously formed as a mixer.

6. An exhaust gas cleaning system in accordance with any one of the previous claims wherein the vaporiser (11) and/or the mixer (12) have a crossed channel structure.

7. An exhaust gas cleaning system in accordance with any one of the previous claims wherein the surfaces (15, 16) of the vaporiser (11) comprise a thermally well conducting material.

8. An exhaust gas cleaning system in accordance with claim 7 wherein the thermally well conducting material includes a steel, which if necessary contains alloying elements, another metallic material, a copper alloy or a ceramic of high thermal conductivity.

9. An exhaust gas cleaning system in accordance with any one of the previous claims wherein the surfaces of the vaporiser include a plurality of guide elements (15, 16), which are substantially arranged along the main flow direction of the flow of exhaust gas.

10. An exhaust gas cleaning system in accordance with claim 9, wherein at least one part of the guide elements (15, 16) is ribbed.

11. An exhaust gas cleaning system in accordance with claim 9 or claim 11 wherein the guide elements (15) are aligned in the form of a star about a guide element (16) arranged in a central position of the passage.

12. An exhaust gas cleaning system in accordance with any one of the previous claims wherein at least one part of the surfaces is catalytically active.

13. An exhaust gas cleaning system in accordance with claim 12, wherein the catalytically active surfaces include catalytically active surfaces for hydrolysis.

14. An exhaust gas cleaning system in accordance with any one of the previous claims wherein one or a plurality of metering elements (7) project into the passage (14).

15. An exhaust gas cleaning system in accordance with any one of the previous claims wherein the metering element (7) contains a feed line (5) for the introduction of a liquid reaction medium into the flow of exhaust gas and a distributing element (19) for the distribution of the liquid reaction medium on the surface of the vaporiser.

16. An exhaust gas cleaning system in accordance with claim 15 wherein the distributing element (19) is formed as a capillary (25) with an outlet aperture (27) or a nozzle (30).

17. An exhaust gas cleaning system in accordance with claim 16 wherein a curve (26) is provided in the region of the outlet aperture (27).

18. An exhaust gas cleaning system in accordance with any one of the previous claims 15 to 17 wherein the feed line (5) feeds a plurality of distributor elements (19).

19. An exhaust gas cleaning system in accordance with any one of the previous claims 15 to 18 wherein the metering element includes means to prevent the premature vaporisation of the liquid reaction medium.

20. An exhaust gas cleaning system in accordance with claim 19 wherein the means is formed as a thermal insulation relative to the flow of exhaust gas.

21. An exhaust gas cleaning system in accordance with claim 19 wherein the means is formed as a thermoelectric Peltier cooling element for the cooling of the liquid reaction medium.

22. An exhaust gas cleaning system in accordance with any one of the previous claims 15 to 21 wherein the metering element (17) is surrounded by a cooling jacket (17) which is formed as a passage (18), which contains a coolant line (9) for the supply of coolant and also a coolant line (10) for the removal of coolant.

23. An exhaust gas cleaning system in accordance with claim 22 wherein the passage (18) is formed as a cylindrical tube in which the distributor element (19) is arranged, whereby a cooling liquid can flow around the distribution element (19) on all sides.

24. An exhaust gas cleaning system in accordance with one of the claims 22 or 23 wherein the passage (18) is U-shaped.

25. An exhaust gas cleaning system in accordance with any one of the previous claims 22 to 24 wherein the passage (18) has a partition wall (28).

26. An exhaust gas cleaning system in accordance with any one of the previous claims 22 to 25 wherein the passage (18) is bounded by two tubes (21, 25) extending concentrically one within the other.

27. An exhaust gas cleaning system in accordance with any one of the previous claims wherein the liquid reaction medium includes an urea-water solution.

28. The use of the exhaust gas cleaning system in accordance with any one of the previous claims in a motor vehicle.

29. A method for the cleaning of exhaust gases, which contain NOₓ by making use of an exhaust gas system according to any one of the previous claims, including the steps of the introduction of an NOₓ containing flow of exhaust gas from an exhaust gas source (2) into a passage (14), the introduction of a liquid reaction medium into the flow of exhaust gas by a metering element (7), the vaporising of the liquid reaction medium on a surface (15, 16) of a film vaporiser (11) wherein heat is transferred from the flow of exhaust gas to the surfaces (15, 16), whereby the film vaporiser receives the required energy directly from the flow of exhaust gas., and reaction of the vaporised reaction medium with NOₓ in a catalytic converter.

30. A method in accordance with claim 29, wherein a mixing of the flow of exhaust gas charged with vaporised reaction medium takes place in a mixer.

31. A method in accordance with one of the claims 29 or 30, wherein NOₓ is reduced in the catalytic converter (13) with the ammonia contained in the gas mixture to N₂ in the presence of oxygen.

## Revendications

1. Système de nettoyage de gaz d'échappement pour des gaz d'échappement contenant du NOx, comprenant un canal fermé (14), dans lequel un flux de gaz d'échappement contenant du NOx est dirigé depuis une source de gaz d'échappement (2) vers un catalyseur (13), dans lequel, en amont du catalyseur (13), un élément de dosage (7) est prévu pour introduire un réactif liquide dans le flux de gaz d'échappement dans le canal fermé, **caractérisé en ce qu'**en aval de l'élément de dosage (7), un évaporateur pelliculaire (11) est disposé dans le canal fermé, qui présente des surfaces (15, 16) disposées dans le flux de gaz d'échappement, sur lesquelles le réactif liquide est appliqué, et sur les surfaces (15, 16) duquel le réactif liquide est amené à s'évaporer avant que le réactif évaporé ne rencontre le catalyseur (13), un transfert de chaleur s'effectuant du flux de gaz d'échappement vers les surfaces (15, 16), l'évaporateur pelliculaire recevant l'énergie nécessaire directement du flux de gaz d'échappement, dans lequel l'élément de dosage est réalisé comme un tuyau avec une pluralité d'ouvertures de dosage, à travers lesquelles le réactif liquide est dirigé vers les surfaces de l'évaporateur pelliculaire.

2. Système de nettoyage de gaz d'échappement selon la revendication 1, dans lequel un filtre à particules (3) est disposé entre la source de gaz d'échappement (2) et l'élément de dosage (7).

3. Système de nettoyage de gaz d'échappement selon l'une quelconque des revendications précédentes, dans lequel un mélangeur (12) est disposé en aval de l'évaporateur pelliculaire (11).

4. Système de nettoyage de gaz d'échappement selon la revendication 3, dans lequel le mélangeur (12) comprend un élément de mélange statique.

5. Système de nettoyage de gaz d'échappement selon l'une quelconque des revendications précédentes, dans lequel l'évaporateur (11) est en même temps réalisé comme un mélangeur.

6. Système de nettoyage de gaz d'échappement selon l'une quelconque des revendications précédentes, dans lequel l'évaporateur (11) et/ou le mélangeur (12) présentent une structure de canaux en croix.

7. Système de nettoyage de gaz d'échappement selon l'une quelconque des revendications précédentes, dans lequel les surfaces (15, 16) de l'évaporateur (11) se composent d'un matériau bon conducteur thermique.

8. Système de nettoyage de gaz d'échappement selon la revendication 7, dans lequel le matériau bon conducteur thermique comprend un acier contenant éventuellement des éléments d'alliage, un autre matériau métallique, un alliage de cuivre ou une céramique à haute conductibilité thermique.

9. Système de nettoyage de gaz d'échappement selon l'une quelconque des revendications précédentes, dans lequel les surfaces de l'évaporateur comprennent une pluralité d'éléments conducteurs (15, 16) qui sont disposés substantiellement le long de la direction d'écoulement principale du flux de gaz d'échappement.

10. Système de nettoyage de gaz d'échappement selon la revendication 9, dans lequel une partie des éléments conducteurs (15, 16) est striée.

11. Système de nettoyage de gaz d'échappement selon les revendications 9 ou 10, dans lequel les éléments conducteurs (15) sont orientés en étoile autour d'un élément conducteur (16) disposé dans une position centrale du canal.

12. Système de nettoyage de gaz d'échappement selon l'une quelconque des revendications précédentes, dans lequel au moins une partie des surfaces présente un effet catalytique.

13. Système de nettoyage de gaz d'échappement selon la revendication 12, dans lequel les surfaces à effet catalytique comprennent des surfaces à effet catalytique hydrolytique.

14. Système de nettoyage de gaz d'échappement selon l'une quelconque des revendications précédentes, dans lequel un ou une pluralité d'éléments de dosage (7) dépasse dans le canal (14).

15. Système de nettoyage de gaz d'échappement selon l'une quelconque des revendications précédentes, dans lequel l'élément de dosage (7) contient une conduite d'amenée (5) pour introduire un réactif liquide dans le flux de gaz d'échappement et un élément répartiteur (19) pour répartir le réactif liquide à la surface de l'évaporateur.

16. Système de nettoyage de gaz d'échappement selon la revendication 15, dans lequel l'élément répartiteur (19) est réalisé comme un capillaire (25) avec un orifice de sortie (27) ou une buse (30).

17. Système de nettoyage de gaz d'échappement selon la revendication 16, dans lequel une courbure (26) est prévue au niveau de l'orifice de sortie (27).

18. Système de nettoyage de gaz d'échappement selon l'une quelconque des revendications précédentes 15 à 17, dans lequel la conduite d'amenée (5) alimente une pluralité d'éléments répartiteurs (19).

19. Système de nettoyage de gaz d'échappement selon l'une quelconque des revendications précédentes 15 à 18, dans lequel l'élément de dosage comprend des moyens pour empêcher l'évaporation prématurée du réactif liquide.

20. Système de nettoyage de gaz d'échappement selon la revendication 19, dans lequel le moyen est réalisé comme une isolation thermique contre le flux de gaz d'échappement.

21. Système de nettoyage de gaz d'échappement selon la revendication 19, dans lequel le moyen est réalisé comme un module thermoélectrique à effet Peltier pour refroidir le réactif liquide.

22. Système de nettoyage de gaz d'échappement selon l'une quelconque des revendications précédentes 15 à 21, dans lequel l'élément de dosage (7) est réalisé par une chemise réfrigérante (17) qui est réalisée sous forme de canal (18) comprenant une conduite de produit réfrigérant (9) pour amener un produit réfrigérant, ainsi qu'une conduite de produit réfrigérant (10) pour évacuer un produit réfrigérant.

23. Système de nettoyage de gaz d'échappement selon la revendication 22, dans lequel le canal (18) est réalisé sous forme de tuyau cylindrique, dans lequel l'élément répartiteur (19) est disposé, de sorte que l'élément répartiteur (19) peut être contourné par un fluide réfrigérant sur tous les côtés.

24. Système de nettoyage de gaz d'échappement selon l'une quelconque des revendications 22 ou 23, dans lequel le canal (18) est configuré en forme de U.

25. Système de nettoyage de gaz d'échappement selon l'une quelconque des revendications précédentes 22 à 24, dans lequel le canal (18) présente une cloison (28).

26. Système de nettoyage de gaz d'échappement selon l'une quelconque des revendications précédentes 22 à 25, dans lequel le canal (18) est limité par deux tuyaux (21, 25) s'étendant de façon concentrique l'un dans l'autre.

27. Système de nettoyage de gaz d'échappement selon l'une quelconque des revendications précédentes, dans lequel le réactif liquide comprend une solution aqueuse d'urée.

28. Utilisation du système de nettoyage de gaz d'échappement selon l'une quelconque des revendications précédentes sur un véhicule.

29. Procédé de nettoyage de gaz d'échappement comprenant du NOx, utilisant un système de nettoyage de gaz d'échappement selon l'une quelconque des revendications précédentes, comprenant les étapes consistant à introduire un flux de gaz d'échappement contenant du NOx depuis une source de gaz d'échappement (2) dans un canal (14), introduire un réactif liquide dans le flux de gaz d'échappement à travers un élément de dosage (7), faire évaporer le réactif liquide à une surface (15, 16) d'un évaporateur pelliculaire (11), dans lequel la chaleur provenant du flux de gaz d'échappement est transférée aux surfaces (15, 16), dans lequel l'évaporateur pelliculaire reçoit l'énergie nécessaire directement du flux de gaz d'échappement, faire réagir le réactif évaporé avec le NOx dans un catalyseur (13).

30. Procédé selon la revendication 29, dans lequel un mélange du flux de gaz d'échappement chargé en réactif évaporé est effectué dans un mélangeur.

31. Procédé selon l'une quelconque des revendications 29 ou 30, dans lequel dans le catalyseur (13) le NOx est réduit à N₂ par l'ammoniac contenu dans le mélange gazeux en présence d'oxygène.
